# EUROPEAN PATENT APPLICATION

(11) **EP 4 779 760 A2**
(43) Date of publication of application: **22.07.2026**
(21) Application number: 26163157.6
(22) Date of filing: 16.02.2024
(51) Int. Cl.: H01M 10/613, H01M 10/625, H01M 10/6556, H01M 10/6563, H01M 50/204, H01M 50/244, H01M 50/249

(54) **RECHARGEABLE BATTERY PACK**

(30) Priority: 17.02.2023 GB 202302282
(62) Divisional of application: 24706682.2
(71) Applicant: Sunswap Ltd., Leatherhead KT22 7BA (GB)
(72) Inventor: TAUBER, Nikolai, Leatherhead, KT22 7BA (GB); PAYNE, Adam, Leatherhead, KT22 7BA (GB); BERNARD-GRAHAME, Robin, Leatherhead, KT22 7BA (GB)
(74) Representative: Beck Greener LLP

(57) **Abstract**

A battery pack (30), related methods and to a transport refrigeration unit of a type configured to draw power from rechargeable batteries in cooling the interior of a mobile enclosure, such as in a trailer or lorry. The battery pack (30) comprises a framework (20) by which the pack is mounted in use and a battery compartment (40) for plural rechargeable battery cells (41). The framework may include at least one shelf for supporting the plural battery cells in the compartment, the shelf having at least one fluid flow channel (67) therein and the battery pack comprises at least one fluid movement device (62) arranged to move cooling fluid through the at least one channel to cool the battery cells in use. The framework may include plural vertically spaced shelves for supporting rows of the plural battery cells in the compartment, wherein the battery cells are orientated such that the terminals for connecting to the cells vertically on top.

## Description

The present invention relates to a battery pack, related methods and to a transport refrigeration unit of a type configured to draw power from rechargeable batteries in cooling the interior of a mobile enclosure, such as in a trailer or lorry.

Rechargeable battery packs are known in many industries. Most of the development work to date has been in the field of Electric Vehicles. However, there are other applications where rechargeable batteries are to be used where approaches used in the EV field are not suitable or non-optimal.

To take one example, there have been recent attempts to provide transport refrigeration units that are powered by rechargeable batteries. Transport Refrigeration Units (TRUs) play an important role for the food distribution industry in delivering fresh, frozen, and other perishable food from field to market. These are used with small rigid vans/trucks right through to articulated trucks pulling a refrigerated container. Often, a TRU may be used with a tractor unit pulling a semi-trailer (known as a semi-trailer truck in the US, an articulated lorry in the UK and various other names in other countries), where the TRU is added to a specially designed and insulated trailer according to a particular customer's specifications. The TRU comprises a refrigeration system that, when driven, blows chill air into one or more compartments in the interior of the trailer to cool the contents.

Traditionally TRUs are diesel driven, particularly when used with trailers. Such units are well established in the industry, but have a number of drawbacks including noise and exhaust emissions. To address the inefficiencies associated with regular diesel-driven TRUs, some hybrid designs and eTRUs have been proposed using solar power and/or batteries to supplement and/or supplant other power sources in powering the refrigeration unit. More recently, the present applicants have proposed in PCT/EP2021/062825, filed 14 May 2021, entitled "Electric Mobile Refrigeration Unit", the entire contents of which are hereby incorporated by reference in their entirety, a refrigeration unit powered by rechargeable batteries, optionally supplemented by solar, to minimise or eliminate the need for diesel power from the tractor unit or separate generator to power the refrigeration system.

Despite the advent of battery powered TRUs, relatively little thought has hitherto gone into how to most effectively accommodate the batteries in such systems. Wherever they are positioned, batteries must be secure and protected from the elements. Typically batteries are heavy and require a strong support framework. Accessibility is an important concept in battery placement, e.g. for serviceability. Also efficiently packing batteries is important, to avoid taking up space that could otherwise be used for other purposes. The envelope available to a TRU is tightly constrained by its positioning and attachment to the container to be cooled. Accordingly, it has been proposed to place batteries in racks under the trailer. However, such arrangements have the disadvantages that the space under the trailer is often already used for other purposes and that provisioning and fitting the system to a trailer becomes more difficult, as separate units are required for the TRU containing the refrigeration system which sits at the front of the trailer, and the battery rack under the trailer, with connections between them then needing to be made. Furthermore no standards currently exist for battery racking systems underneath the trailer or indeed anywhere else, meaning a TRU manufacturer must collaborate with trailer manufacturers in provisioning a suitable racking system for each specific trailer, rather than being able to ship a unit that complies with the relevant standards which can be relied on to integrate with any compliant trailer and so can be shipped and fitted by the end user of the trailer.

Other considerations are the need to thermally manage the batteries, keep them free of moisture and dirt, protect them from damage through collision, vibration or shocks, manage the interconnects and battery management functions and maintain the proper orientation for optimum performance as dictated by the battery cells being used. The weight of the batteries must also be properly supported and transferred to the trailer. Consideration should also be given to ease and cost of manufacturing the unit, reliability, as well as maintenance and servicing the units in the field.

It should be noted that it is known in the prior art for diesel driven TRUs to include small batteries to power the electronics and start up of the refrigeration system. However, these batteries are small and not intended or capable of providing the main source of power to the refrigeration system, and so the fitting such a small battery into the confines of the TRU or achieving high battery densities becomes less of a concern. The present disclosure is concerned with battery packs suitable for providing the TRU's primary source of power, possibly supplemented by solar or other sources, and it is desired to incorporate a large volume of battery power capable of driving the refrigeration system, i.e. as sometimes called "traction batteries", into the TRU itself in an optimum way.

The present invention aims to address these and other problems in the prior art both in the field of transport refrigeration units and in other applications where rechargeable batteries are used to power a mobile device.

According to a first aspect of the present invention, there is provided a rechargeable battery pack comprising:
a framework by which the pack is mounted in use;
a battery compartment for plural rechargeable battery cells, the framework including at least one shelf for supporting the plural battery cells in the compartment, the shelf having at least one fluid flow channel therein;
at least one fluid movement device arranged to move cooling fluid through the at least one channel to cool the battery cells in use.

According to a second aspect of the present invention, there is provided a rechargeable battery pack comprising:
a framework by which the pack is mounted in use;
a battery compartment, the framework including plural vertically spaced shelves for supporting rows of the plural battery cells in the compartment, wherein the battery cells are orientated such that the terminals for connecting to the cells vertically on top.

In an embodiment, the battery cells are supported by shelves of the framework, the shelves each having at least one fluid flow channel therein;
at least one fluid movement device arranged to move fluid through the channels to cool the battery cells in use.

Any suitable device can be powered by the battery pack.

The shelves may therefore have a joint function of supporting the weight of the battery cells mounted thereto, allowing rows of battery cells to be stacked vertically on plural shelves of the framework, and providing thermal management to the battery cells by moving cooling fluid through the channels in the shelves such that heat from the batteries is drawn into the channels from the top face of the shelves in contact with the battery cells and dissipated. This allows high density of battery cells in the battery pack.

The cells may be stacked according to the needs of the application, i.e. to meet the requirements of voltage/capacity of the device being powered. The cells may be stacked into modules, i.e. cell stacks arranged in series and/or parallel in a housing to protect the cells, and the modules may be stacked into module stacks, e.g. connected in series and/or parallel with BMUs or other services supplied per battery module stack. Modules/cells preferably the same size and/or orientation. The cells are preferably vertically mounted in use such that the cells each have a face in contact with the bottom of the casing/heat plate, which is in turn in contact with the shelves allowing the shelves to thermally manage the cells. Also, some battery cell designs require vertical orientation for their performance. Preferably the terminals of the battery cells or battery modules (where organised in modules) are at the top. NB orientation is given by the shelves supporting the weight of the battery modules, i.e. the battery modules are on top of the shelves in use defining the vertical direction. In most applications, the battery cells will be disposed laterally across the shelves, and the fluid channels will also be aligned with this lateral direction, which will in most cases coincide with the larger dimension of the pack, i.e. the pack is elongate laterally, i.e. in its width, compared with its depth. The battery packs will generally be vertically mounted in use, e.g. to a vertical wall or framework of the device that is to be powered by the battery pack.

This is particularly useful where the pack is for powering and being accommodated in a TRU or similar technology. The design of trailers, their attachment to tractor units and various standards applicable to trailers place various constraints on the dimensions and layout of a TRU, i.e. it has typically a shallow box shape, i.e. depth dimension smaller than other dimensions, with a flat, generally rectangular back face for placing up against the wall of the enclosure and a flat, generally rectangular, but possibly curved (due to the enclosure pivoting), front face, which in use is fixed in the vertical plane when attached to a side wall of the enclosure, e.g. trailer or lorry. The TRU framework may define a first volume in which the refrigeration system is located and a second volume below in which the battery pack is mounted are located, typically below. This provision of a dedicated volume in the TRU for batteries is preferable to optimise the packing of batteries and make maximum use of the limited space available in the TRU that is not needed for other components, e.g. the refrigeration system. The battery pack may be adapted to fit in the available volume, maximising use of space whilst still allowing access to the necessary components such as fans, contactors, chargers, for use and servicing.

The battery framework comprises structural members that are generally permanently fixed together, e.g. welded metal members, to increase the structural integrity. Preferably, the area through which batteries are accessed is unobstructed by members of the framework, i.e. when constructing or maintaining the unit, the battery can be offered up to the position in which it is ultimately fixed to the shelf unobstructed by members or neighbouring batteries in that layer of batteries. This may for instance comprise of advancing the battery modules into the space allocated for the battery on the shelf from the rear of the battery framework (or possibly the front) before fixing it in position. The framework may have fixing means by which it is fixed to the device it is intended to power in use. These fixing means, which may be for example holes in the framework by which bolts or other fixings can be used to attach the framework to the device, are outside the battery compartment, e.g. at the sides and or top and bottom of the framework. When used in a TRU system, the battery pack may include structural framework members for directly mounting to a truck or trailer, as well as to the refrigeration system pack, i.e. the part of the overall TRU containing the refrigeration system. Alternatively, the battery pack may mount to a unitary structural framework o the TRU, which also supports the refrigeration system, and this framework mounts to the truck or trailer.

In embodiments the TRU refrigeration system is capable of running solely on battery power from the batteries in the TRU (optionally supplemented by solar) to cool the enclosure for a journey, without any power input from an ICE, axle re-gen systems, or batteries mounted external to the TRU), although in other embodiments, other power sources may be used to supplement the batteries in the TRU. Thus the invention is advantageous in making efficient use of available space in a TRU, particularly where the battery capacity is large, e.g. preferably the battery capacity of the TRU for powering the refrigeration system may greater than 20kWh, or in some examples greater than 60kWh, or in some further examples, greater than 120kWh.

As discussed, the space within the TRU and hence battery pack is typically is shallow, such that a dedicated volume for the batteries will also be relatively shallow, i.e. having a smaller depth than its width or height dimensions. Typically the battery modules are prismatic, i.e. cuboid in shape, such that multiple modules of the same dimensions can efficiently be packed in an array, i.e. one or more row and one or more columns of batteries in a cuboid overall battery volume.

The battery pack is arranged to be sealed and dry, i.e. to protect and/or seal it from the wider environment, to prevent water, dirt or other liquids entering the compartment that may be encountered during use so that water/liquids cannot penetrate. The battery pack may have one or more covers (e.g. front and/or rear) that cooperate with the framework to completely enclose the battery compartment and that are removable to allow access to the battery cells, e.g. during manufacture or maintenance. The first and second compartments in the TRU may therefore be made open the environment to some degree, which is typically needed so that external airflow can reach components of the refrigeration system and or battery thermal management system. This also simplifies the manufacture of the TRU as no special measures are needed to separate the first and second compartments and keep the second compartment isolated.

Busbars may be provided for making electrical connection to plural battery modules. Typically the bus bar is mounted to the front of the shelves Thus, when the battery modules have been fixed in position in the battery racking space, the busbar can be installed. Typically the battery volume extends across most of the width of the TRU, e.g. between 50% and 90% of the width, to make best use of the space in the TRU. Where the front face of the TRU is curved, this leaves additional space in the central region where the curvature provides additional space. This may conveniently be used to house the Battery Management Units and parts of the power distribution system.

In an embodiment, the battery pack may have a curved front cover that is concentric with a constant radius from a standard king pin connection to the trailer.

In an embodiment, the battery modules are arranged in an array of plural rows and columns.

In an embodiment, the rechargeable battery pack is arranged to power a transport refrigeration unit for a truck or trailer, wherein either
i) the battery pack framework is arranged to attach to a refrigeration system pack forming a transport refrigeration unit, wherein at least the battery pack framework mounts to the truck or trailer, or
ii) the battery pack is arranged to attach to a TRU framework that also supports a refrigeration system, and the TRU framework attaches to the truck or trailer.. Thus, the TRU can be split into two separate packs, a refrigeration system pack and a battery pack, which can be attached together, and which both include structural framework elements for fixing to the truck/trailer. Alternatively, the TRU can have a unitary framework to which the refrigeration system and the battery pack are mounted, and this unitary framework is then attached to the trailer or truck.

A TRU has an envelope that is constrained by the manner in which it is mounted to the end of a container, trailer or vehicle. This often gives rise to an available volume for the battery pack that is substantively cuboid, but relatively shallow. The pack may advantageously be arranged with plural shelves of multiple battery cells/modules along the shelves to adapt itself to the available space.

In an embodiment, the battery compartment is sealed so as to keep the battery pack dry when in use.

In an embodiment, the battery cells are arranged as battery modules each comprising a housing containing a subset of the total number of cells

In an embodiment, the framework comprises left and right side members between which the shelf or shelves extend, wherein the channels run laterally through the shelves and communicate with the apertures in the side members.

Thus, the thermal management of the batteries and/or BMUs can be accomplished via channels that are not in communication with the sealed battery compartment by causing cooling fluid to flow in these channels via fluid movement devices mounted outside the battery compartment, e.g. to the side members of the framework, where preferably they are accessible for servicing.

In an embodiment, comprising at least one battery management unit (BMU) for the battery cells which is mounted within the battery compartment, preferably to a shelf.

In an embodiment, each shelf has plural channels at least one of which is for cooling the battery cells supported by that shelf and at least one of which is for cooling the BMU mounted to that shelf.

This allows separation of the cooling mechanisms and avoids coupling of the different heat sources. In particular, the BMU gives rise to a more concentrated heat load and it is generally desirable to shield the batteries from being heated by this heat load which is challenging in the limited space available. By using separate channels, which may be sized and positioned accordingly, the thermal management system can separate out the cooling of these elements and avoid or reduce heat from one source being coupled to the other. If desired, separate cooling systems may be used for each channel, e.g. liquid cooling for the BMU unit and air cooling for the batteries, or the same system can be used for both, e.g. air or liquid cooling fluid circulating or passing through the channels.

In an embodiment, at least one channel for cooling the BMU is positioned at least partially below at least one channel for cooling the battery cells and extends to the front face of the shelf where the BMU is mounted.

Thus, the top face of the shelf on which the battery cells are mounted can absorb the heat from the batteries and transfer it to the dedicated channel for dissipating the battery heat load, whereas the channel for the BMU can absorb the heat from the BMU at the front face and be kept substantially away from the top face and so avoid or reduce coupling heat from the BMU to the battery units. The front face of the shelf may have a thicker wall compared with the rest of the shelf (e.g. the top face of the shelf) to help absorb the locally generated heat from the BMU and laterally spread it across the front of the shelf, aiding its transfer into the BMU heat channel

In an embodiment, the channel for cooling the battery cells is divided by at least one internal vertical wall into plural sub-channels from the front to the rear of the shelf to help strengthen the shelf
Preferably the channel for cooling the BMU extends from the front face only as far as the first internal wall. As the BMU is mounted to the front face, it is generally unnecessary for the BMU channel to extend all the way to the back of the shelf. In contrast, the battery heat channel preferably extends from front to back of the shelf as the battery modules/cells are substantively in contact with the full depth of the shelf. The battery heat channels at the rear of the shelf can be expanded in height to occupy the full thickness of the shelf.

In an embodiment, comprising a plenum outboard of one side member by which the one or more air movement devices communicate with the air channels in one or more shelves.

In an embodiment, a top member extends across the top of the top row of battery cells between the side members, and front and rear covers are fixed to the side members, top member and at least one shelf to form a seal around the periphery of the front and rear faces of the battery compartment to seal it.

In an embodiment, comprising at least one contactor or at least one connector in a side member in an externally accessible position for making external connection to the battery pack being one or more of:
high voltage/current connectors for connecting to the battery cells/modules;
contactors for switching power to/from the battery pack;
connecting to the heater elements; and
connecting to the BMUs.

In an embodiment, wherein the contactors, fluid movement devices and/or chargers are accessible outside the battery compartment and/or when still joined to the device being powered by the battery pack in use such that they are serviceable and/or replaceable. For instance, in a TRU application, the chargers are accessible when the battery pack is joined to the refrigeration system and/or mounted to a trailer or truck.

In an embodiment, at least one shelf includes at least one heating element in its top face controllably arranged to heat the battery module it supports.

In an embodiment, at least one shelf has a front or rear sealing face extending across its front or rear face, being substantively planar and at least 5mm, and more preferably at least 10mm, and arranged to seal against the front or rear cover of the battery pack.

In an embodiment, the framework includes one or more lifting features outside the battery compartment arranged to allow the battery pack to be lifted by a crane or forklift for use in mounting/dismounting the battery pack to an end device.

In an embodiment, battery modules are insertable into the battery compartment through the rear face of the framework.

In an embodiment, the battery cells and or modules are arranged in the battery compartment such that one or more of:
there is less than 1cm horizontally between adjacent battery modules and/or the battery modules comprise at least 90% of the width of the battery compartment;
there is less than 5 cm vertically between adjacent battery modules and/or the battery modules comprise at least 75% of the height of the battery compartment;
the battery modules comprise at least 90% of the depth of the battery pack.

In a further aspect, the invention extends to a mobile device comprising:
a rechargeable battery pack according to any preceding claim mounted to the device;
an electrical system to be powered by the rechargeable battery pack.

In a further aspect, the invention extends to a transport Refrigeration Unit comprising:
a framework for attaching to a mobile enclosure, e.g. trailer, container or truck;
a refrigeration system for cooling and/or heating the interior of the mobile enclosure attached to the TRU framework; and
a rechargeable battery pack according to any preceding claim arranged to power the refrigeration system.

In a further aspect, the invention extends to a method of providing a temperature controlled payload at a destination using the unit of claim 23, comprising powering the refrigeration system with the battery pack to control the temperature of the payload in the mobile enclosure whilst transporting it to the destination.

In an embodiment, comprising one or more of:
replacing a fan, contactor or charger whilst the battery pack is joined to the refrigeration system and attached to the truck or trailer; and
removing the battery pack from the refrigeration system and truck or trailer and swapping in another battery pack to repair, maintain or alter the battery capacity.

In an embodiment, comprising mounting battery cells or battery cells stacked into modules to shelves of the pack;
mounting BMUs to the front of the shelves;
making electrical connections between battery cells, BMUs and external connectors of the battery pack; and
installing front and rear covers onto the framework to seal the battery compartment.

It will be appreciated that any features expressed herein as being provided "in one example" or "in an embodiment" or as being "preferable" may be provided in combination with any one or more other such features together with any one or more of the aspects of the present invention.

Embodiments of the present invention will now be described by way of example with reference to the accompanying drawings, in which:
Figure 1 shows a perspective view of an example from the front of an example of a TRU according to an embodiment of the invention;
Figure 2 shows a front view of the TRU of Figure 1 with the TRU outer covers removed and Figure 2b shows the TRU with the battery pack removed;
Figure 3 shows a perspective view of an example of a battery pack according to an embodiment of the invention for use with the TRU of Figure 1;
Figure 4 shows a front view of the battery pack of Figure 3 with the front cover removed;
Figure 5 shows a perspective view of a framework for the battery pack of Figure 3;
Figure 6 shows a perspective view of a shelf from the framework of Figure 5;
Figure 7 shows a cross section of the shelf;
Figure 8 shows a cross section of a BMU mounted to the shelf of Figure 7;
Figure 9 shows from above a view of the top surface of the shelf showing a simulated thermal analysis in use;
Figure 10 shows in cross section a charger mounted to the underside of the bottommost shelf in the framework;
Figure 11 shows the busbar connectors;
Figure 12 shows the connectors from the right hand side of the framework;
Figure 13 shows a battery module containing a stack of cells;
Figure 14 shows the lifting features of the framework of the battery pack and how they engage with lifting apparatus, such as a forklift;
Figure 15 shows a cross sectional view of the battery pack incorporated into a TRU attached to a trailer;
Figure 16 shows a top down view of the connections between battery modules
Figures 17a and 17b show another example of a refrigeration system pack and battery pack for a TRU according to an embodiment of the invention.

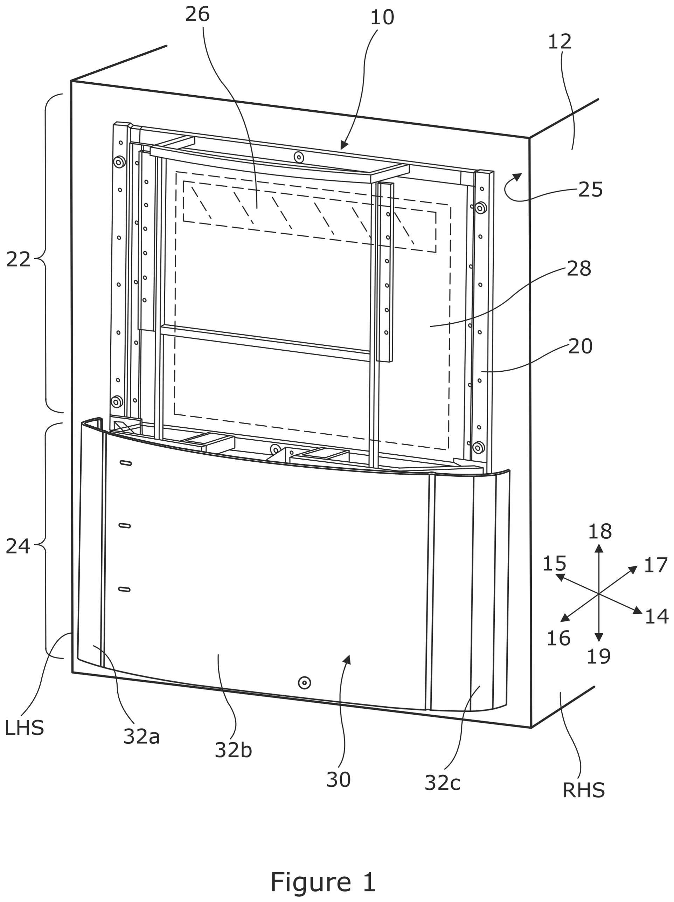

Figure 1 shows a perspective view of an example of a transport refrigeration unit 10, attached to the front of a semi-trailer 12 of the sort that can be attached to and pulled by a tractor unit (not shown) to transport goods loaded to the interior of the trailer via doors at the rear of the trailer, where the TRU 10 implements a system for refrigerating the interior of the trailer. (Generally in the following description references to the "front" are in the direction of arrow 16, i.e. the forwards direction of the trailer; the "rear", arrow 17; the "top", arrow 18; the "bottom", arrow 19 and the "sides", numerals 15.) It will be appreciated that the TRU may equally be attached to other vehicles types, such as rigid body trucks, vans and lorries, or containers such as shipping containers that can be lifted onto a trailer for transportation and may be generally applicable to cooling the interior of any enclosure. Although the unit has been described as cooling the interior of the trailer, it may also be arranged to heat the interior of the trailer.

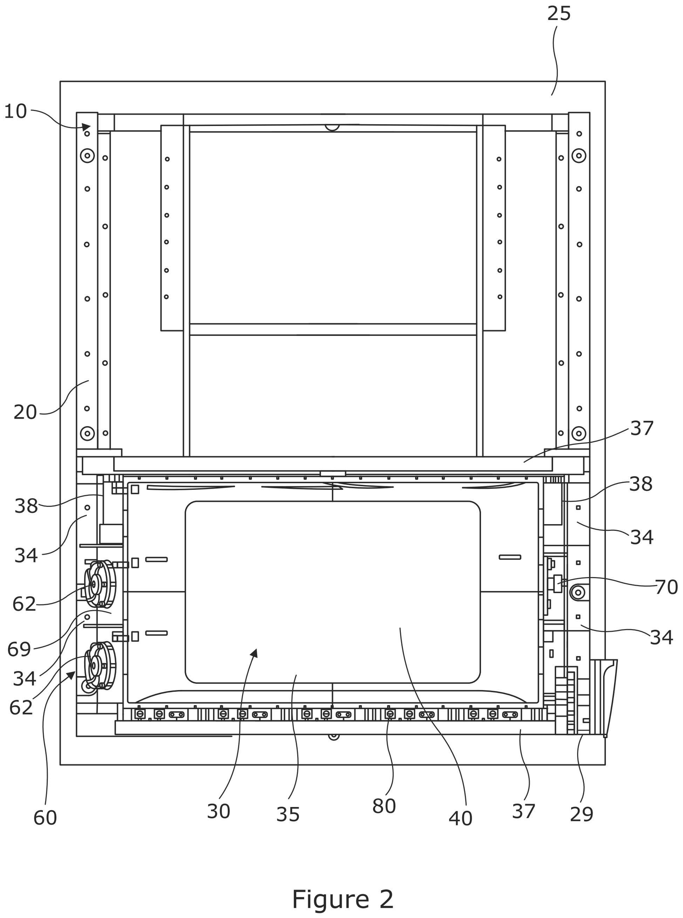

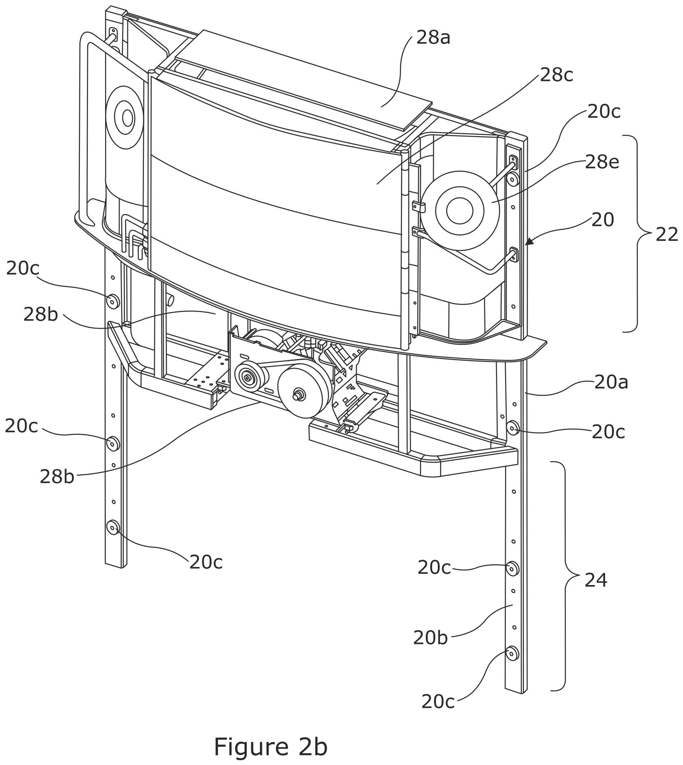

The TRU 10 comprises a structural framework 20 (shown separately in Figure 2B) which supports the various elements of the unit and which provides attachment points 20c for fixing it to the trailer, which are generally provided at the sides, e.g. in vertical side members 20a. The framework 20 generally defines an upper volume 22 and a lower volume 24. The upper volume 22 has an external cover (not shown for clarity) and houses a vapour compression refrigeration system 28 (shown in Figure 2B but omitted in Figure 1 for clarity) comprising primarily the evaporator 28a, compressor 28b, condenser 28c, and expansion valve 28d, together with fans 28e for moving air over the evaporator and condenser. When the compressor and fans are driven, these combine to blow chilled (or heated) air into the interior of the trailer 12 through an aperture 26 in the end wall of the trailer 25 to cool (or heat) the content, as is generally well known in the art.

The lower volume 24 houses a rechargeable battery pack 30 for powering the refrigeration system. An external cover of the TRU, here in 3 sections 32a,b,c, covers the battery pack. TRU cover is for instance plastic, with separate portions covering the battery compartment area, and the two side areas to allow access to components in the side areas without removing the entire cover. These covers are largely aesthetic and preferably unnecessary to keep the battery modules free from moisture.

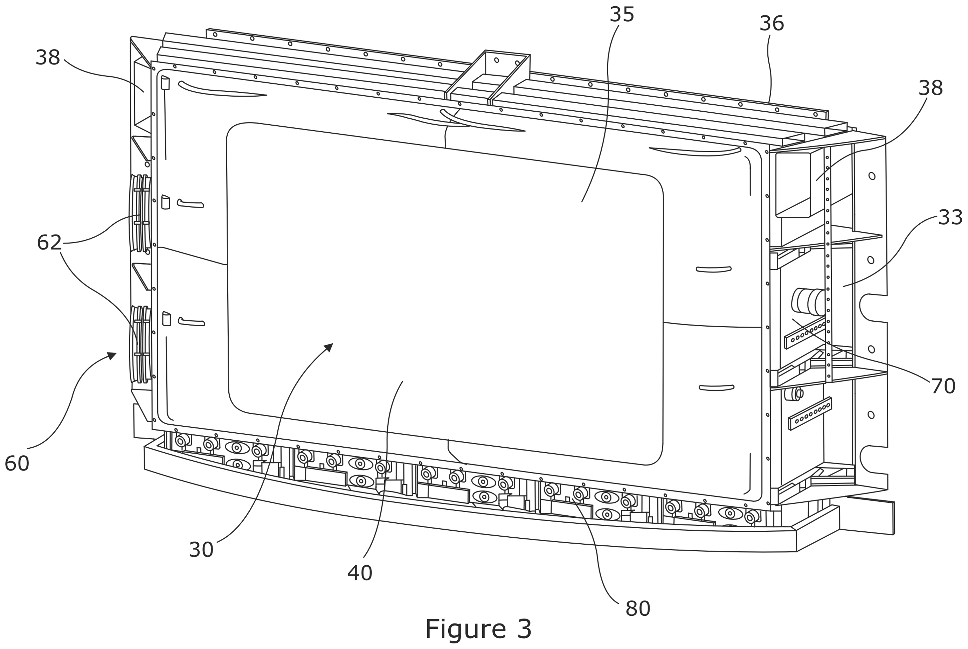

Figure 2 illustrates the TRU without the external cover showing the battery pack 30 fixed, preferably removably, to the framework 20 by fixtures 34 connecting flanges at the sides of the battery pack with lower vertical side members 20b sections of the framework. Crash barriers 37 may be installed above and/or below the battery pack mounted to the TRU 20 framework to protect against impacts to the exposed face of the battery pack. Figure 3 shows the battery pack dismounted from the TRU framework 20.

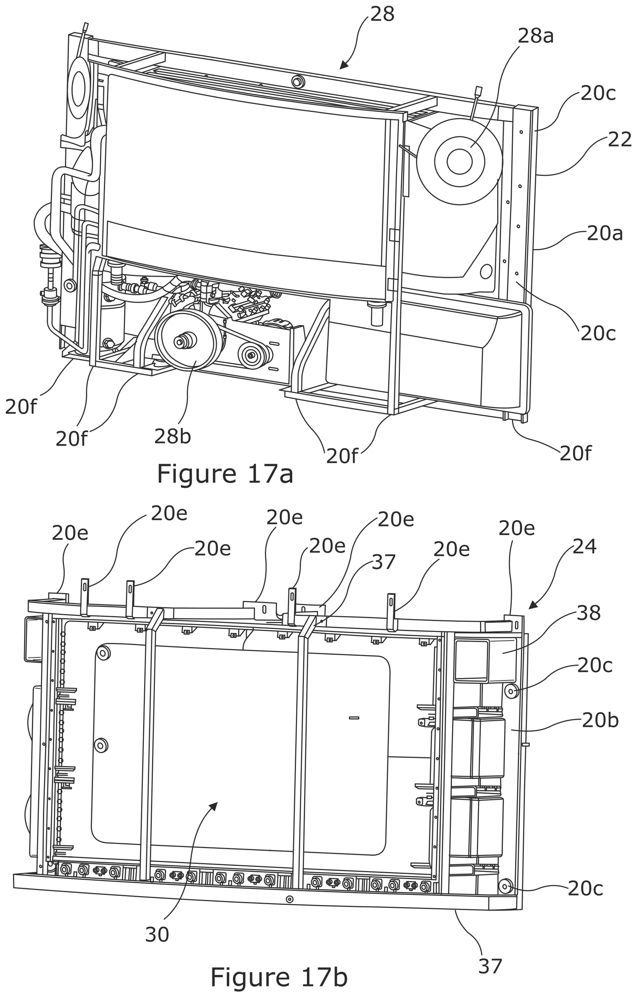

In the example of Figures 1 and 2, a unitary structural framework 20 is used for the TRU to which the battery pack mounts. Alternatively, as shown in Figures 17a and 17b, the framework 20 may be provided in separable parts 20a,20b, split between the upper volume and lower volume. For instance, the lower part of the framework, e.g. vertical side members 20b, which support the battery pack may be separate from the upper part of the framework 20a which supports the refrigeration system. The lower part of the framework may now be incorporated into the battery pack 30 itself. For instance, in the present example, the flanges at the sides of the battery pack are permanently fixed (e.g. welded) to the lower vertical side members 20b. Joining flanges 20e are provided by the battery pack for fixing to the upper part of the framework 20a at points 20f (or the upper framework for fixing to the lower framework, or both) to structurally connect the two parts. Thus, in effect, a refrigeration system pack and a battery pack are provided which may be connected together to form the TRU, both of which incorporate structural elements with attachment points 20c for mounting to the truck or trailer via fixtures. This arrangement of incorporating structural members into the battery pack 30 by which it is directly attached to the trailer may increase the structural integrity of the battery pack so the battery pack is better able to remain fixed to the trailer face in the event of a crash. In other respects, the example of Figures 1 and 2 and the example of Figures 17a and 17b may be the same.

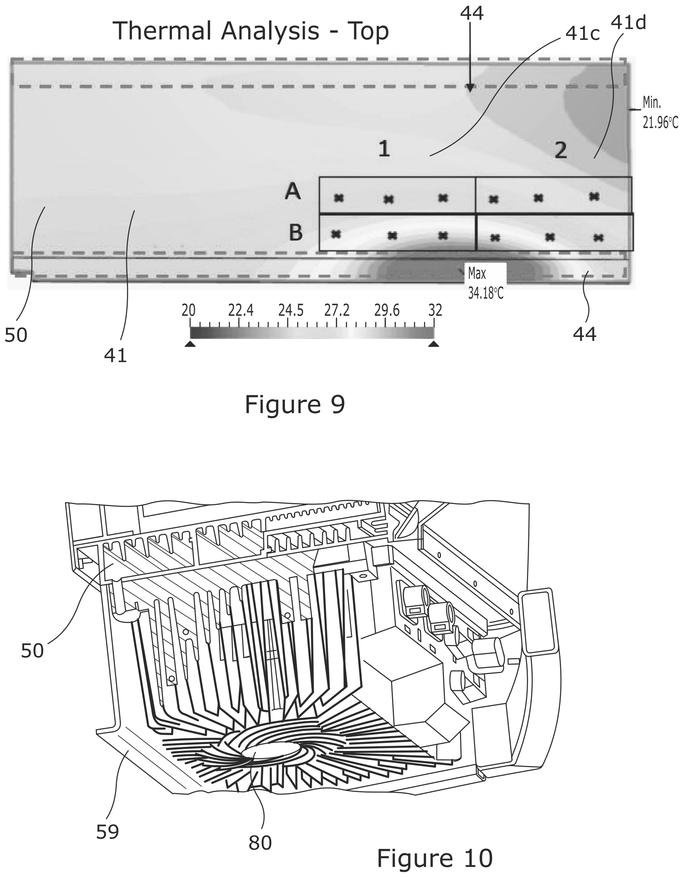

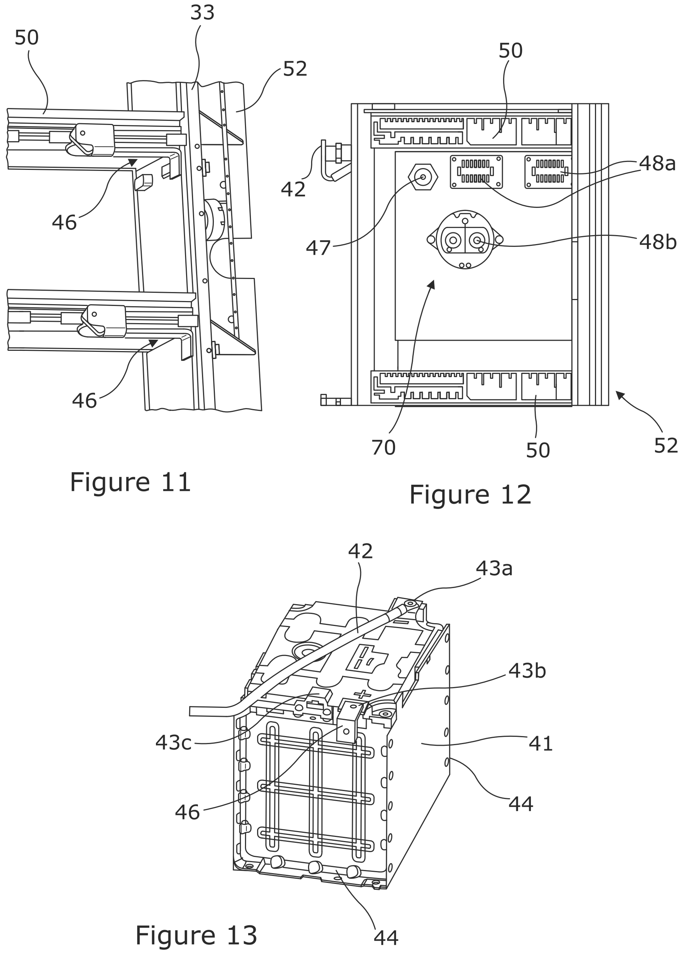

As described more fully below, the battery pack 30 comprises a structural framework 33 defining within a battery compartment 40 including plural battery modules 41 (as shown in Figure 13). Front and rear covers 35,36 cooperate with the framework to seal the battery compartment such that moisture cannot penetrate to the battery modules. The framework provides structural support to the battery pack including i) mounting the battery modules inside and other components, and ii) allows it to be attached to the TRU framework 20 via the fixtures 34 in the example of Figures 1 and 2 or to be attached to the upper framework 20a and to the trailer in the example of Figures 17a,17b., and iii) to be lifted into position for mounting/dismounting via lifting features 38. Fan units 62 forming part of the thermal management system 60 of the battery pack are positioned at one side of the battery pack, connectors 70 (shown in more detail in Figure 12) for making contact with the battery pack are positioned at the opposite side. Chargers may be conveniently mounted underneath the battery pack (shown in more detail in Figure 10) for charging the batteries (e.g. from AC grid when at the depot and/or from solar power attached to the trailer in transit or at the depot), providing power to the refrigeration system 30 (i.e. to drive the compressor and fans) and/or exporting power from the batteries to the grid at the depot.

The TRU 10 also comprises control electronics, communication means 29 for transferring data with a remote service that can manage or monitor the TRU, a UI by which an operator can control the TRU, connectors for connecting to solar panels on the roof of the trailer or shore power when the trailer stationary. These may be mounted to any suitable point in the framework and communicate with the battery pack via connectors 70 and the refrigeration system.

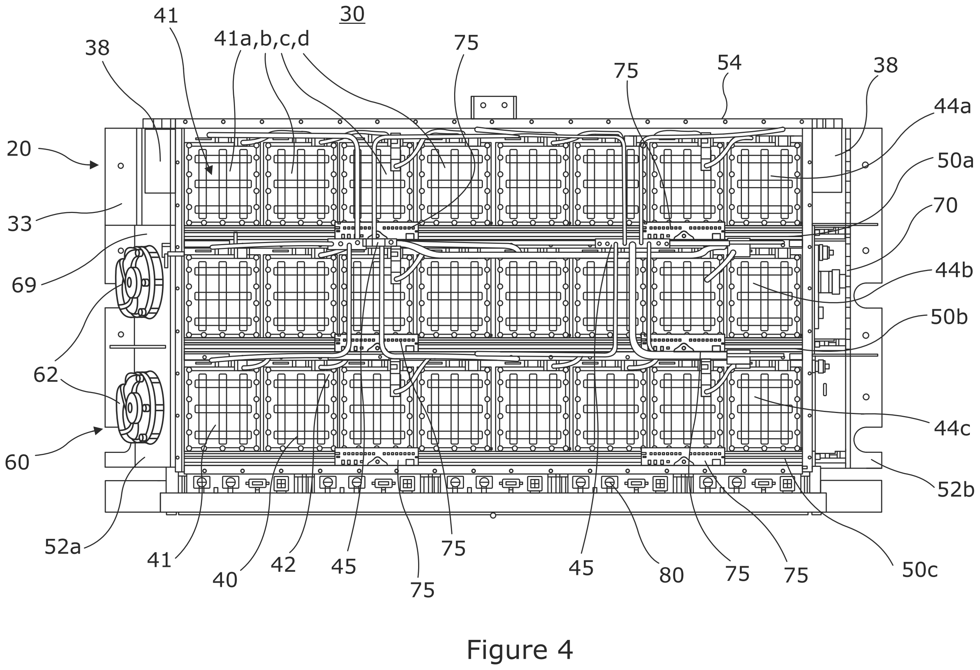

Figure 4 shows the battery pack 30 with the front cover 35 removed. In this example, there are 3 rows 44a,b,c of 8 battery modules 41, each of which contain plural battery cells in a housing strong enough to be handled/mounted. In each row, the 8 battery modules 41 are connected in series to give two battery modules stacks of 4 modules each. The battery modules terminals are at the top when the modules are fixed in the unit. The battery cells are preferably in an upright orientation when the stacks are fixed in the pack. This is because, for at least some battery cell arrangements, it is important for battery performance to have an upright orientation to avoid some of the battery plates potentially being starved of electrolyte. Also, for thermal management, it is advantageous to have each battery cell in contact with the lower face of the battery module, which may be a thermal plate, to manage heat load dissipation from the battery cells, as described below. The battery modules as preferably but not necessarily identical in size, voltage/capacity, and arrangement of cells within.

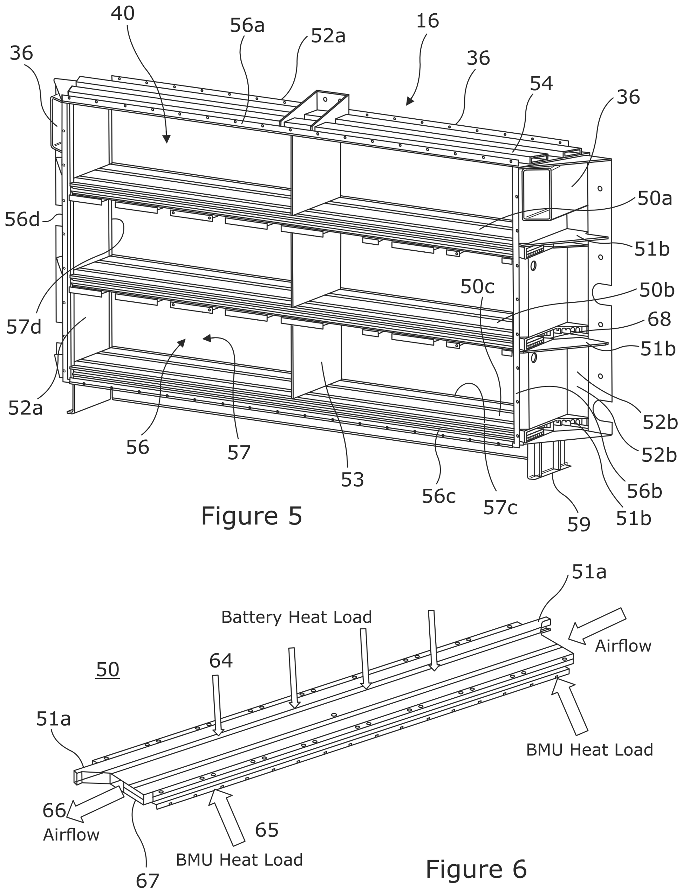

Each row 44 of battery modules is supported by a shelf 50a,b,c running laterally across the battery pack, i.e. in a left right direction. The shelves are connected at the sides to vertical left and right side members 52a,b. The side members are generally L-shape in cross section, one leg attaching to the shelves and one leg extending laterally away from of the battery compartment providing a flange for attaching to the main body of the TRU via fixtures in the example of Figures 1 and 2, or being attached to the vertical side members 20b in the example of Figures 17a, 17b. Optionally, cross plates 51b may be included to brace the two legs, whilst generally keeping the space open for access to components mounted here (as described below). Alternatively or additionally the shelves themselves may have an extending portion 51a at their ends that is welded to the lateral leg to help brace the side members. A top member 54 runs across the top of the battery pack also connected at the sides to the left and right side members. The shelves, top member and top member form a structurally rigid battery support framework 20. Further members 53 may be provided between the shelves to brace the framework. The framework also has lifting features 38, for instance towards the top of the framework at the sides, arranged for, say, a forklift to lift the battery pack and manoeuvre it, i.e. offer it up to the TRU framework for attachment and removal. The elements of the framework may be welded together, or using other structurally strong attachment method, to create a waterproof connection. Figure 5 shows the framework in isolation.

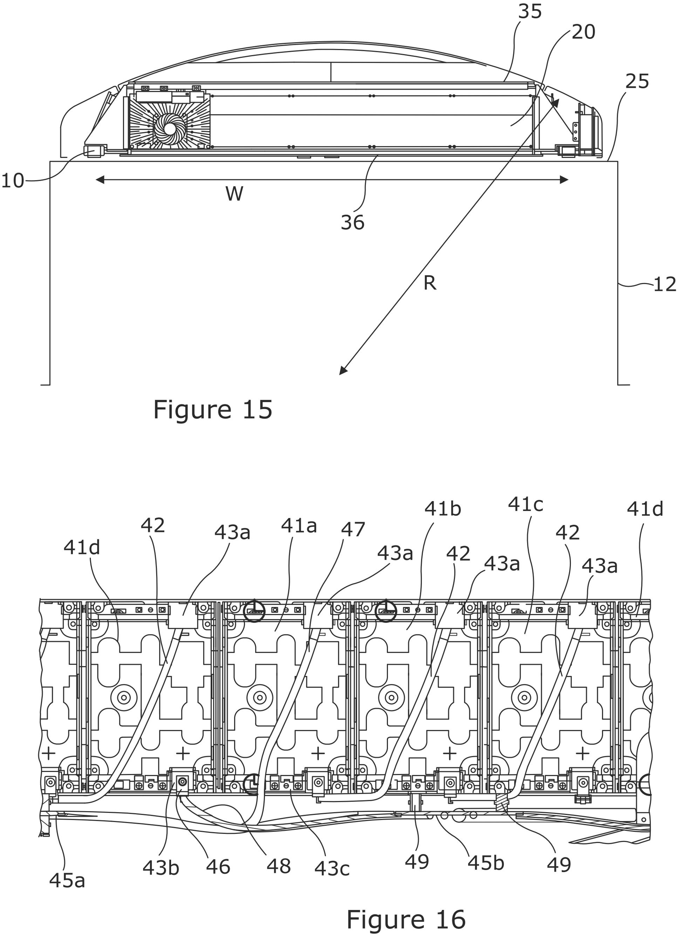

The front and rear covers 35,36 are attached, preferably removably by fixings, to the side members, shelves and top members at least around the periphery 57a,b,c,d of the open front 57 and rear faces 58 (and optionally to any the intermediary shelves) to help brace and structurally strengthen the assembly and also create a seal such that the battery compartment within is kept dry in use, i.e. sealed from ingress of rain, spray and dirt from the road, condensation in the refrigeration compartment, e.g. to within IP67 standard, or any appropriate standard. The rear cover 36 may be thin aluminium sheet. The front cover 35 may be aluminium or plastic and may be bowed outwards to make use of the additional space in the centre of the TRU envelope (see Figure 15) in order to accommodate additional components at the front of the battery pack in front of the battery modules.

A two stage venting system may be provided in the battery compartment 40. In stage 1, a flex vent regulates pressure changes due to fluctuating temperature/altitude change. In stage 2, a burst vent regulates in case of battery venting. These may be provided on the front cover 35 of the battery pack (not specifically shown).

Battery chargers 80 are mounted to the underside the bottom shelf, with their connectors being accessible when the battery pack is mounted to the TRU framework. The framework may have additional structure 59 extending downward below the bottom shelf surrounding the volume occupied by the chargers at the sides and rear to protect the chargers and or provide a structure to allow the battery pack to be positioned on the ground.

As shown in more detail in Figure 16, the battery modules 41a-d in each stack of modules 41 are connected together via interconnects 42, i.e. in series, positive terminal 43b to negative terminal 43a. The positive and negative terminals of each battery module stack 41, i.e. the end terminals in the series connected battery stacks, are then connected in parallel via interconnects 47,48 to respective positive and negative busbars 45a,b which are mounted in respective positions to the front of the shelves on standoffs 49. As shown in Figure 13, the connection to the rear terminal 43a (negative in this example) is preferably made before the battery module is introduced into the shelf during assembly. The front terminal 43b (positive in this example) has an L-shape busbar preinstalled that extends downward such that connection can be made to the terminal at the front of battery stack once it is in the shelf. This arrangement deals with the problem that it is difficult to access the terminals when the battery modules are in the shelves. Fuses may be provided within the series of interconnects/busbars to protect the circuit. As shown by Figure 12, each module busbar 45 is connected to a respective high voltage/current connector 46 that passes through a side member 52 (here the right hand side member 52b, but it can be at any other convenient point) of the battery framework 33 through a sealed grommet/gland to maintain the waterproofing of the battery compartment. Positive and negative contactors 48b may be provided for each terminal allowing current to/from the battery pack to be switched by the control system of the TRU to isolate the battery pack. Thus, external high current connection can be made to the battery pack via the contactors for charging and for powering the refrigeration system/exporting power via suitable cabling (not shown).

The modules may for instance provide 12V and each module stack and thus the overall pack may provide 48V. It will be appreciated that the battery cells may be stacked in many different ways. For instance, different arrangements and numbers of battery cells, modules may be provided to provide the necessary voltage and capacity. The number of cells in a module may be varied. So-called "Cell to Pack" technology could be used to mount cells individually to the shelves without housing them in a battery module. Different numbers of shelves of modules can be used depending on the desired battery capacity, and so on.

Referring back to Figure 4, a battery management unit (BMU) 75 is provided for each battery module stack 41 fixed to the front of the shelves 50, as described below. As is generally known, a function of a BMU is in balancing the battery cells when charging by bleeding off current from high-voltage/SoC cells (i.e. weaker cells having a smaller capacity that are charged faster) through a resistor so the cells in the module look like they have the same capacity. The BMUs connect to the battery cells via connectors 43c (shown in Figures 13 and 16) at the front of the battery modules. The BMUs are connected by a harness (not shown) to a low voltage/current connector 48a at the side of the battery pack through which external connection can be made for controlling and powering the BMUs.

It is generally preferred to mount the busbars 45 and BMUs 75 at the front of the pack to the shelves, as the volume occupied by the battery modules will generally be a regular flat cuboid, i.e. constant depth, whereas the envelope available for the TRU will have a curved front surface due to the fixed distance (R) from the king pin of the trailer (see Figure 15) leaving usable space at the front between the battery modules and the front of the TRU at least in the central region.

Figure 6 shows a shelf 50 in isolation. The shelves are responsible for removing heat from the battery modules as well as from the battery management units and thus form part of the thermal management system 60. The shelves include channels 67 running laterally through them, i.e. in a left/right direction. The side members have apertures 68 (shown in Figure 5) communicating with the channels 67. Fan units 62 are positioned at outboard of the left hand side members 52a (equally the positioned could be reversed to be at the right hand side of the unit, but generally they are at the opposite side to the connectors so the connectors are not obscured, whilst both connectors and fans are conveniently situated and accessible) to draw air 66 through these channels to provide a cooling airflow. A plenum 69 is formed between the fan units 62 and the apertures 68 in the side members 52. At the opposite side, air is drawn into the channels through the apertures 68 in the side member. As the shelves 50 are welded to the side members (or otherwise fixed in a sealed fashion) around their periphery, these apertures only allow air into the channels 67 in the shelves and do not allow a path into the battery compartment, i.e. the waterproofing of the battery compartment is not compromised.

The battery heat load 64 is absorbed from the top face of the shelf 50, which is in close thermal contact with the bottom surface of battery stacks, and the BMU heat load 65 is absorbed by a BMU heat dissipation face at the front of the shelf. The heat is transferred to the airflow and dissipated outside the battery pack. The shelf may be made, for instance, from extruded aluminium with parts welded together where required to form the various channels. Recesses may be provided in the top surface of the shelf for thin heating pads (not shown), e.g. self-regulating PTC heaters, which when supplied with current may be used to heat the batteries when operating in low ambient temperature conditions to a preferred operating point. The PTC heaters may be connected to a connector 48a at the side of the battery pack for providing current to the heating pads to heat the batteries modules.

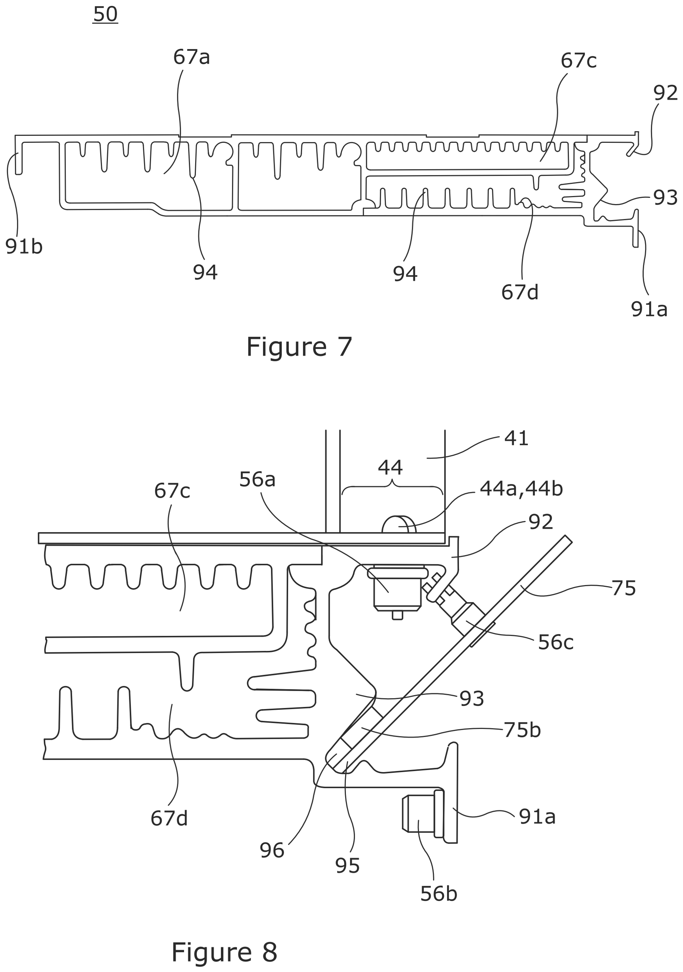

Figure 7 shows a cross section of the shelf 50. A sealing face 91a,91b is formed at the front and rear of the shelf, which, as described below, is used to seal the battery pack, i.e. to bear against the front and rear covers as described above. The side and top members have similar sealing faces (not shown) performing a similar function. These might be, for instance, between 10 mm and 20 mm wide to promote a good seal. A bead or gasket or other element may be included at the face to further promote a good seal between the battery pack covers and structural members of the framework.

The shelf 50 has plural channels 67a,b,c,d formed by the walls of the shelf through which the air is drawn by the fan units with internal radiating fins 94 on the surfaces most exposed to the heat loads 64,65 to help the heat radiate from the material to the channels. As shown by Figure 8, the front of the shelf has a BMU fixing face 92 by which the BMU is fixed to the shelf, e.g. locating the bottom edge 95 of the BMU circuit board into a recess 96 in the fixing face and locking it place via a snap fixing 56c or other fixing. The BMU resistor 75b is arranged to bear against and be thermally interfaced to the heat dissipation face 93 of the shelf 50 to promote heat 65 being drawn from the resistor into the material of the shelf. The wall may be made thicker in this region to increase the bulk of the material to promote heat being conducted laterally in the material away from the localised heat load of the resistor to help spread the heat and allow it to radiate into the channel. Directly behind the heat dissipation face is a BMU hot air channel 67d which is arranged to dissipate the heat from the BMU and keep it isolated from the battery modules so as not to heat them. This channel extends part way to the rear of the shelf.

The battery stacks/modules 41 also generate heat during charging/powering the refrigeration system which needs to be dissipated, as the cells have an optimum range of temperature. Typically a cell powering a TRU would require an ambient temperature operating range of -20C to 45C, and a cell optimum operating temperature range of 10C to 30C. The operating temperature over its life time can be expected to influence the number of cycles the cell can provide before performance degrades. Thus, thermal management of battery cells is an important consideration. Another separate channel 67c is formed generally at the front of the shelf above the BMU heat dissipating channel 67d, which is provided for dissipating heat from the batteries. Two further channels 67a,67b are formed behind this channel 67c and the BMU hot air channel 67d, one behind the other, which both extend from the top to the bottom of the shelf and which are also used for dissipating heat from the batteries. Thus, three channels 67a-c are provided for dissipating battery heat in this example, but it will be appreciated that different numbers of channels could be used. For instance, it will be appreciated that these could be combined into a single, large channel for dissipating heat from the battery extending from the front to the back of the shelf, but using three separate channels (or any number of plural channels could be used) has the advantage of the vertical walls between channels bracing the shelf making it better able to support the weight of the batteries.

As described above, a heating pad may be placed on the top of the shelf to help heat battery modules where they are operating at low ambient temperatures, in which case the cooling fans may be switched off.

As an example, in a battery pack with 70kWhr of storage capacity, the fan units may cause airflow of 266 m³/hr through the shelf, which gives a maximum heat load from the battery modules of 144W per shelf and from the BMUs of 233W per shelf.

The BMU 75 generates concentrated heat t and it is important that this heat does not flow to the batteries and cause unwanted battery heating. It is preferred to keep the thermal management of the BMU and battery modules separate. Thus, at the front of the shelf, the BMU hot air channel is positioned substantively in the lower portion of the shelf such that it is substantively not in contact with the upper face of the shelf which is in contact with the battery modules. Optionally a small portion immediately behind the front face extends upwards towards the top face in order to capture as much as possible of the heat generated by the BMU captured by the front face before it is radiated into the channel. Some of this heat may therefore affects the top surface of the shelf locally. However, this generally coincides with steel flanges 44 in the battery stacks/modules used for mounting, rather than the battery cells and so the heat does not affect battery performance. As shown by Figure 8 rivet nuts 56a may be pressed into the aluminium shelf material to accept fasteners 44b through holes 44a the flanges 44 of the battery stacks, and similarly rivet nuts 56b can be provided for mounting the BMU and busbars at the front of the shelf. As shown in Figure 5, the front face of the intermediate shelves 50a,50b can be machined away in places to create space for the connection to the batteries, busbars, etc. as the intermediate shelves are not used to seal to the front cover.

Figure 9 shows thermal analysis performed of the shelf in operation during maximum heat load. As can be seen, a hot spot is formed on the top face of the shelf in the vicinity of the BMU resistor. Only the immediately adjacent battery cells (B) in the immediately proximate cell stack/battery modules (1 and 2) experience significant temperature increase due to the BMU heating, which is generally found to be acceptable. As can be seen, the most intense heat coincides with where the steel flanges in the battery modules are located. Thus, the shelf provides separate cooling for BMU and batteries tailored to their individual needs. The BMU can tolerate higher temperatures than the batteries, i.e. up to say 65C. Preferably the BMU temperature is kept within 25C of ambient and the cell temperature is kept within 10C of ambient.

It will be appreciated that in the present example air cooling is used for both the battery thermal management and dissipating heat from the BMUs. However, liquid cooling may be used as an alternative to air cooling by for example replacing the fans with pumps and the air plenum with a manifold/pipes to circulate liquid through the channels in the shelves to draw heat from the shelves and expel it outside the battery pack, e.g. via a radiator. A combination of air cooling for the battery modules and liquid cooling for the more intensive heat load generated by the BMU could be used. In any case, preferably separate channels are provided in the shelves for the BMU cooling and battery cooling, with appropriate fluid movement devices to move/circulate the fluid in the channels.

Accordingly, the shelf arrangement may provide multiple functions within the battery pack, including:
- Structural integrity of Battery Pack
- Cooling of battery stacks fixed on the top face
- Cooling of BMUs fixed on the front face
- Sealing faces for front and rear covers
- Mounting of chargers on bottom face
- Heating of battery stacks in sub-zero ambient temperatures

### Servicing and Maintenance

It contemplated that the fan units, contactors and chargers may be serviced in the field, e.g. by swapping out for new units. These can be accessed at the sides and underneath the unit by removing the side TRU covers without unsealing the battery compartment or even removing the battery pack form the TRU. However, the battery pack is intended to be a sealed unit which is not serviceable in the field for replacing, say, battery modules that have failed. Preferably the entire battery pack is removed and swapped out in this scenario. The battery pack may be opened and reprovisioned by the manufacturers/service company. However, preferably the battery pack does not contain any moving parts (such as found in the fluid movement devices/contactors) and so is expected to require less frequent servicing.

### Assembly

The battery pack framework is provided as a complete welded assembly, i.e. in the form shown in Figure 5. This may be mounted to a custom jig to allow for different positionings to help assembly. The assembly is preferably first placed in a horizontal position and the chargers mounted into holes in the bottom extrusion shelf, as shown in Figure 10. As shown in Figure 11, the glands are added into the holes in the right hand side member and main pack busbar inserted through the glands. As shown in in Figure 13, the connectors and contactor are mounted into the right hand side member in a mounting plate. The heating pads may be attached to the recesses in the top face of the shelves.

As shown in Figure 13, diagonal interconnects 42 and L-shape busbars 46 are pre-installed onto the cell stack/battery modules onto the respective terminals. The terminals and busbars may be electrically insulated/protected with a cover (not shown). The battery modules are introduced into the shelves from the open face 57 at the rear of the framework, i.e. direction arrow 16 in Figure 5, and fixed in position to the shelves 50 front and rear via fasteners 44a passing through holes 44b in the flanges 44 of the battery stacks. There is preferably between 1 and 5 mm clearance between battery modules on a shelf when mounted. The battery modules in each modules stack are connected in series by connecting the diagonal interconnect 42 of a battery to the L-shape busbar 46 of its neighbour.

BMU boards 75 are installed with snap in connectors 56c. BMU -> stack harnesses are installed to connect the modules to the BMU (not shown for ease of clarity). The BMU-> SMU harness is installed to connect the battery management units to the Source measure unit (SMU), which charges the battery by setting a desired current rate or discharge a battery by dissipating power, while monitoring a battery's voltage.

The fan plenum 69 is installed on the left hand side member and the fans mounted 62 (and/or pumps and manifolds if using liquid cooling).

The module stack and pack level cables and busbars are installed and the remaining standoffs and fuses installed.

The front cover 35 and rear covers 36 are installed, i.e. via fixings to the sealing faces of the bottom shelf, side members and top member.

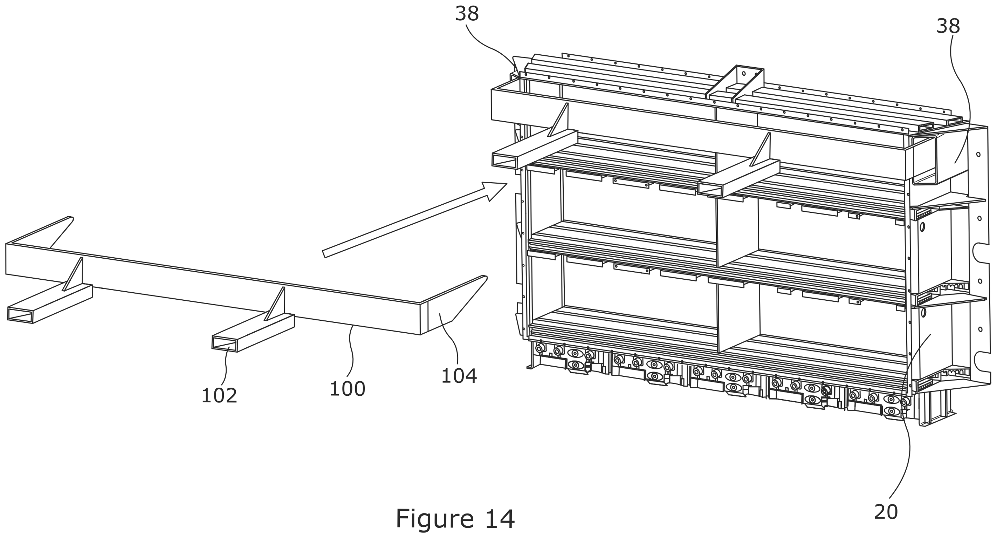

The battery pack is then attached to the framework 20 in the examples of Figures 1 and 2, or to the upper part of the framework 20a in the example of Figures 17a and 17b. As shown in Figure 14, the assembly is now ready to be lifted into position by a forklift and attached via bolts to the trailer. A jig 100 may be provided to engage 102 the forklift forks and engage 104 the lifting features 38 of the battery framework 20.

Last the crash barriers are installed and the TRU outer covers attached.

Figure 15 shows the TRU 10 installed on a trailer 12, where the radius of from the kingpin R sweeps out a volume on the face of the trailer which constrains the volume of the TRU. The framework and battery compartments/battery modules are generally cuboid, being typically between 2m and 2.5 meters wide and between 2m and 2.5m high to fit to a standard trailer whilst making maximum use of the available space for battery chemistry.

The members used for the framework may be made from aluminium box section of appropriate dimensions. The overall battery a pack may weigh between 400kg and 600kg and when mounted to the TRU, the assembly may weigh between 800kg and 1200kg or more. with the assembly weight is similar to conventional diesel TRUs.

The battery pack is described in relation to being used with a TRU. However, the invention is not so limited and the battery pack may be used in other applications where it is desired to electrically power mobile devices and in particular where the space available to mount a battery pack makes it desirable to stack battery cells in a vertical direction within the pack.

Embodiments of the present invention have been described with particular reference to the examples illustrated. However, it will be appreciated that variations and modifications may be made to the examples described within the scope of the present claims.

## Claims

1. A rechargeable battery pack (30) arranged to power a transport refrigeration unit, TRU, (10) for a truck or trailer, the pack comprising:
a framework (20) by which the pack is mounted in use;
a battery compartment (40), the framework including plural vertically spaced shelves for supporting rows of the plural battery cells in the compartment, wherein the battery cells are orientated such that the terminals for connecting to the cells vertically on top, wherein either:
i) the battery pack framework is arranged to attach to a refrigeration system pack forming the transport refrigeration unit, wherein at least the battery pack framework mounts to the truck or trailer, or
ii) the battery pack is arranged to attach to a framework of the TRU that also supports a refrigeration system, and the TRU framework attaches to the truck or trailer.

2. A rechargeable battery pack (30) arranged to power a transport refrigeration unit, TRU, (10) for a truck or trailer, the pack comprising:
a framework (20) by which the pack is mounted in use;
a battery compartment (40) for plural rechargeable battery cells (41), the framework including at (50) least one shelf for supporting the plural battery cells in the compartment, the shelf having at least one fluid flow channel therein (67);
at least one fluid movement device (62) arranged to move cooling fluid through the at least one channel to cool the battery cells in use,
wherein either:
i) the battery pack framework is arranged to attach to a refrigeration system pack forming the transport refrigeration unit, wherein at least the battery pack framework mounts to the truck or trailer, or
ii) the battery pack is arranged to attach to a framework of the TRU that also supports a refrigeration system, and the TRU framework attaches to the truck or trailer.

3. A pack according to any preceding claim, wherein the battery compartment is sealed so as to keep the battery pack dry when in use.

4. A pack according to any preceding claim, wherein the battery cells are arranged as battery modules each comprising a housing containing a subset of the total number of cells.

5. A pack according to any preceding claim, wherein the framework comprises left and right side members between which the shelf or shelves extend, wherein the channels run laterally through the shelves and communicate with the apertures in the side members.

6. A pack according to any preceding claim, comprising at least one battery management unit (BMU) (75) for the battery cells which is mounted within the battery compartment, preferably to a shelf, wherein optionally each shelf has plural channels (67a,b,c,d) at least one of which is for cooling the battery cells supported by that shelf and at least one of which is for cooling the BMU mounted to that shelf, wherein optionally at least one channel for cooling the BMU is positioned at least partially below at least one channel for cooling the battery cells and extends to the front face of the shelf where the BMU is mounted, wherein optionally the channel for cooling the battery cells is divided by at least one internal vertical wall into plural sub-channels from the front to the rear of the shelf to help strengthen the shelf, the pack optionally comprising a plenum outboard of one side member by which the one or more air movement devices communicate with the air channels in one or more shelves.

7. A pack according to any preceding claim, wherein a top member (54) extends across the top of the top row of battery cells between the side members, and front and rear covers are fixed to the side members, top member and at least one shelf to form a seal around the periphery of the front and rear faces (57,58) of the battery compartment to seal it.

8. A pack according to any preceding claim, comprising at least one contactor (48) or at least one connector in a side member in an externally accessible position for making external connection to the battery pack being one or more of:
high voltage/current connectors for connecting to the battery cells/modules;
contactors for switching power to/from the battery pack;
connecting to the heater elements; and
connecting to the BMUs.

9. A pack according to any preceding claim, wherein the contactors, fluid movement devices and/or battery chargers (80) are accessible outside the battery compartment and/or when still joined to the device being powered by the battery pack in use such that they are serviceable and/or replaceable, and/or wherein at least one shelf includes at least one heating element in its top face controllably arranged to heat the battery module it supports.

10. A pack according to any preceding claim, wherein at least one shelf has a front or rear sealing face extending across its front or rear face, being substantively planar and at least 5mm, and more preferably at least 10mm, and arranged to seal against the front or rear cover of the battery pack.

11. A pack according to any preceding claim, wherein the framework includes one or more lifting features (38) outside the battery compartment arranged to allow the battery pack to be lifted by a crane or forklift for use in mounting/dismounting the battery pack to an end device.

12. A pack according to any preceding claim, wherein battery modules are insertable into the battery compartment through the rear face of the framework.

13. A pack according to any preceding claim, wherein the battery cells and or modules are arranged in the battery compartment such that one or more of:
there is less than 1cm horizontally between adjacent battery modules and/or the battery modules comprise at least 90% of the width of the battery compartment;
there is less than 5 cm vertically between adjacent battery modules and/or the battery modules comprise at least 75% of the height of the battery compartment;
the battery modules comprise at least 90% of the depth of the battery pack.

14. A Transport Refrigeration Unit comprising:
a framework for attaching to a mobile enclosure, e.g. trailer, container or truck;
a refrigeration system for cooling and/or heating the interior of the mobile enclosure attached to the TRU framework; and
a rechargeable battery pack according to any preceding claim arranged to power the refrigeration system.

15. A method of providing a temperature controlled payload at a destination using the unit of claim 14, comprising powering the refrigeration system with the battery pack to control the temperature of the payload in the mobile enclosure whilst transporting it to the destination.
